# EUROPEAN PATENT SPECIFICATION

(11) **EP 4 579 446 B1**
(45) Date of publication and mention of the grant of the patent: **09.12.2026**
(21) Application number: 24211104.5
(22) Date of filing: 06.11.2024
(51) Int. Cl.: G06F 9/38

(54) **REGISTER RENAMING CACHING**
CACHESPEICHERUNG ZUR ÄNDERUNG DER NAMEN VON REGISTERN
MISE EN MÉMOIRE CACHE DE RENOMMAGE DE REGISTRE

(30) Priority: 29.12.2023 US 202318400938
(43) Date of publication of application: 02.07.2025
(73) Proprietor: INTEL Corporation, Santa Clara, CA 95054 (US)
(72) Inventor: Ranganathan, Adithya, 560048 Bengaluru (IN); Gaur, Jayesh, 560066 Bangalore (IN); Shemy, Regev, 3508441 Haifa (IL); Subramoney, Sreenivas, 560103 Bangalore KA (IN)
(74) Representative: Samson & Partner Patentanwälte mbB

(56) References cited:
- US-A1- 2002 144 098
- US-B1- 6 240 509
- US-B2- 7 272 701

## Description

### BACKGROUND

Processors in computers and other information processing systems may use a register renaming technique to convert an in-order stream of instructions into out-of-order by mapping logical registers into physical registers.

The document US 6 240 509 B1 relates to an out-of-pipeline trace buffer for holding instructions that may be re-executed following misspeculation. As one example, it describes a processor including an execution pipeline to execute instructions, wherein at least some of the instructions are executed speculatively, and a trace buffer outside the execution pipeline to hold the instructions, and wherein instructions that are associated with speculation errors are replayed in the execution pipeline from the trace buffer.

Further background art is known from the document US 2002/144098 A1 relating to register rotation prediction and precomputation.

### SUMMARY

The present invention provides an apparatus and a method, as defined by the independent claims. Further developments and/or variants are defined by the dependent claims, respectively.

### BRIEF DESCRIPTION OF DRAWINGS

Various examples in accordance with the present disclosure will be described with reference to the drawings, in which:
FIG. 1A illustrates building an instruction trace for register renaming according to an embodiment.
FIG. 1B illustrates a register renaming pipeline according to an embodiment.
FIG. 2 illustrates a register renaming circuit according to an embodiment.
FIG. 3 illustrates a method for register renaming according to an embodiment.
FIG. 4 illustrates an example computing system.
FIG. 5 illustrates a block diagram of an example processor and/or System on a Chip (SoC) that may have one or more cores and an integrated memory controller.
FIG. 6A is a block diagram illustrating both an example in-order pipeline and an example register renaming, out-of-order issue/execution pipeline according to examples.
FIG. 6B is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for register renaming caching. According to some examples, an apparatus includes a register renaming cache, front-end circuitry, lookup circuitry, and execution circuitry. The register renaming cache is to store register renaming information associated with an instruction trace. The register renaming information is to be learned from a first execution of the instruction trace and is to be used to perform register renaming in connection with a second execution of the instruction trace. The front-end circuitry is to provide, based on the instruction trace, operations for execution. The lookup circuitry to look in the register renaming cache for entries corresponding to the operations. The execution circuitry is to execute the instruction trace.

As mentioned in the background section, a processor or processor core in a computer and other information processing system may use a register renaming technique to convert an in-order stream of instructions into out-of-order by mapping logical registers into physical registers. For example, a register renaming technique may use a structure (e.g., a register alias table or RAT) to hold mappings of logical registers into physical registers. The RAT may be read for each instruction to rename instruction sources to physical mappings. Similarly, the logical destination register produced by the instruction may be mapped to a new physical register and written into the RAT as the latest mapping.

However, the complexity and power costs of register renaming increases nonlinearly with increasing allocation width of the core. Furthermore, the RAT may create power hotspots in the core because it consumes much power in a small area. Additionally, use of a RAT is timing critical and affects core frequency.

The complexity and power costs of a RAT with a high allocation width may also be high due to inline dependency calculations and or the number of ports in RAT arrays. Regarding inline dependency calculations, the complexity of this portion of the register renaming logic is a square function of the allocation width of the core. The levels of logic increase linearly with the increase in allocation width from one generation of core to the next. Regarding the ports in RAT arrays, an integer instruction can have up to three sources and one destination, so each integer instruction will use three times the allocation width read ports and the allocation width number of write ports. Therefore, the total ports for N-wide allocation is four times the allocation width. Linear addition of ports with increasing allocation width costs super-linear increase in dynamic capacitance and timing complexity of accessing the RAT arrays for reads and writes.

Methods, apparatus, systems, non-transitory computer-readable storage media, etc. according to embodiments may provide for reducing the complexity and power consumption of register renaming. As an example, embodiments may reduce the levels of logic for register renaming, thus reducing complexity of inline dependency circuitry. As another example, embodiments may by implemented in connection with the use of a RAT (e.g., and reduce complexity and power consumption by reducing the number RAT ports, and may be referred to as a RAT trap; however, embodiments are not limited to implementations including a RAT). As another example, embodiments may allow more complex eliminations to be performed, thus increasing performance. As another example, embodiments may allow cores to scale to higher levels of performance with fewer register renaming (e.g., RAT) constraints. As another example, embodiments may facilitate re-organizing code (e.g., by compilers and binary editors) to reduce register renaming (e.g., RAT) constraints.

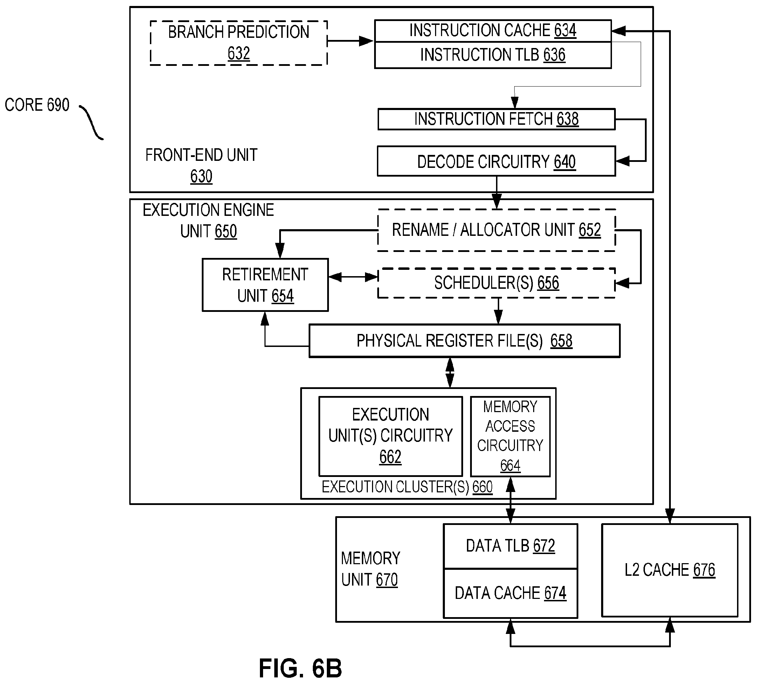

Embodiments may be based on viewing register renaming as a property of a sequence of instructions in an allocation window, not as a property of a single micro-operation (uop), and learning register renaming properties of a stream of instructions (e.g., instructions between a taken branch to the next taken branch) and storing them in a cache (which may be referred to as a RAT trap cache, or more generally, a register renaming cache). When the same taken-taken trace re-appears from predictions (e.g., by a branch prediction unit or BPU, which may correspond to branch prediction circuitry 632 in Figure 6B, as described below), the learned register renaming for the whole trace may be replayed from the register renaming cache, as the sequence of uops is static between a taken-taken trace. According to embodiments, register renaming may be performed across traces of taken-taken branches.

In embodiments, a register renaming cache may be implemented to store only the unique logical registers read out (live-ins) and written back (live-outs), e.g., to the RAT, per trace. The use of embodiments may ease critical timing paths (e.g., of the RAT) and improve overall performance and power consumption.

Benefits of embodiments may depend on the hit rates in the register renaming cache. A register renaming cache organized as taken-taken traces may have significant underutilization depending on constraints such as the number of sequential live-in registers, taken branch density, code size, etc. Therefore, embodiments may provide for allowing compilers, binary editors (e.g., Binary Optimization Layout Tool (BOLT) or Propeller), etc. to reorganize code to minimize the number of sequential register live-ins and live-outs as well as the taken-taken length of frequent (profile generated) paths per the register renaming instruction trace, which may improve utilization of space in the register renaming cache and allow building a power and area efficient register renaming cache (e.g., for large code footprint server applications).

In embodiments, branch associations (e.g., taken-taken branch associations from a BPU) are learned and used (e.g., instead of invoking a complex RAT circuit) with a simple lookup. In embodiments, register renaming properties across traces of a program spanning one taken branch to the next taken branch (e.g., from a BPU such branch prediction circuitry 632 in Figure 6B, as described below) are learned and stored in a register renaming cache. When the same trace in the program re-appears (e.g., through a BPU prediction), the register renaming properties of the traces are read out from the cache and renaming happens through a simple circuit.

In embodiments, renaming operations are learned across uops (which may be fused uops or fuops; embodiments may be described based on fuops but are not limited to implementations based on fuops) within an instruction trace because renaming for a fuop is not just a property of the fuop itself; instead, it depends on the sequence of instructions getting renamed along with it, in an allocation window. One fuop from a given basic block will get its sources renamed (e.g., through RAT reads) when it is the first fuop in an allocation window. When same fuop is not the first fuop in an allocation window, it might be getting its sources forwarded from the destination of another prior fuop in the allocation window (inline dependency). Hence, to learn register renaming and store them in a register renaming cache, deterministic boundaries are set for every rename operation that can happen within a cycle. In embodiments, renaming operations are learned across fuops within last_taken_target to next_taken_branch (LTT-NTB) traces.

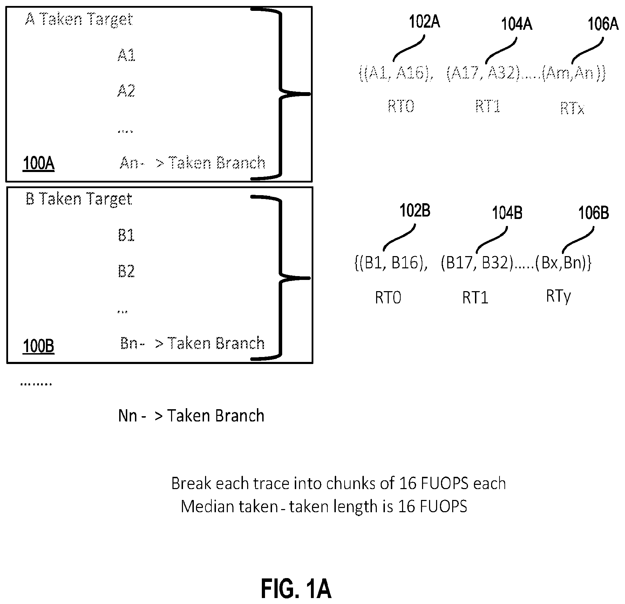

For example, Figure 1A illustrates building an instruction trace for register renaming according to an embodiment. A given LTT-NTB trace could be very long (in terms of number of fuops), so embodiments may include breaking them down into capsules. For example, a capsule size may be based on median trace lengths, such as sixteen fuops. In embodiments, each trace exceeding a length of sixteen fuops is broken down into capsules of sixteen fuops. Each capsule of a trace goes to a different entry in the register renaming cache, all belonging to same set but different ways and have the same tag. Hence, a register renaming cache hit may mean multiple ways of a set are hitting.

For example, as shown in Figure 1A, LTT-NTB trace A (100A) from A1 to An is broken into x+1 capsules or chunks of 16 fuops each (102A, 104A, to 106A) and LTT-NTB trace B (100B) from B1 to Bn is broken into y+1 capsules or chunks of 16 fuops each (102B, 104B, to 106B).

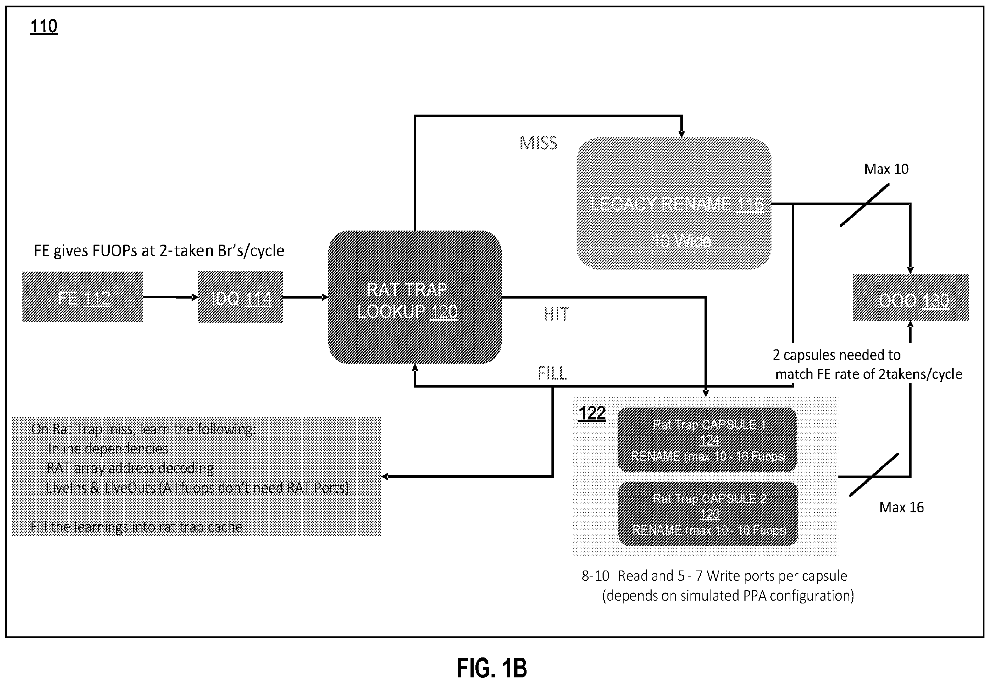

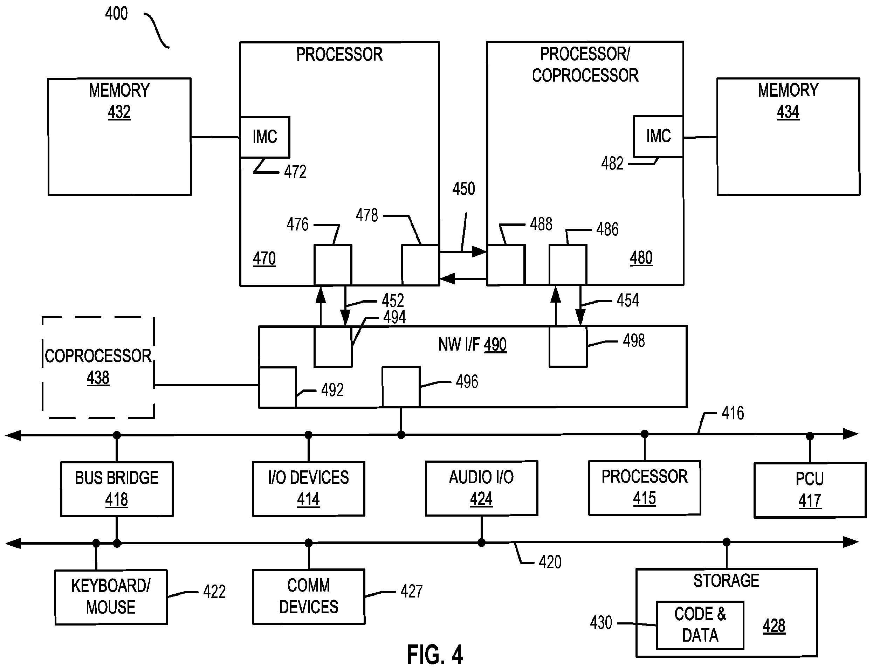

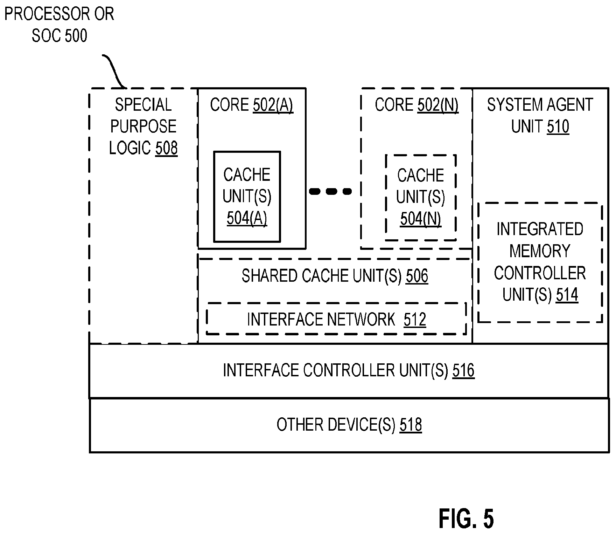

Figure 1B illustrates a register renaming pipeline 110 according to an embodiment. Register renaming pipeline 110 may be implemented in a processor, processor core, execution core, etc. which may be any type of processor/core, including a general-purpose microprocessor/core, such as a processor/core in the Intel^{®} Core^{®} Processor Family or other processor family from Intel^{®} Corporation or another company, a special purpose processor or microcontroller, or any other device or component in an information processing system in which an embodiment may be implemented. For example, register renaming pipeline 110 may be implemented in any of processors 470, 480, or 415 in Figure 4, processor 500 or one of cores 502A to 502N in Figure 5, and/or core 690 in Figure 6B, each as described below, in circuitry, logic gates, structures, hardware, etc., all or parts of which may be included in a discrete component and/or integrated into the circuitry of a processing device or any other apparatus in a computer or other information processing system.

As shown, register renaming pipeline 110 includes front end (FE) 112, instruction decode queue (IDQ) 114, legacy rename block 116, lookup block 120, register renaming cache 122, and out-of-order (OOO) block 130. In embodiments, FE 112 may correspond to front-end unit 630 in Figure 6B, as described below. In embodiments, legacy rename block 116, lookup block 120, and/or register renaming cache 122 may be implemented in rename/allocator unit 652 in Figure 6B, as described below. In embodiments, OOO block 130 may correspond to scheduler 656 in Figure 6B, as described below.

FE 112 may represent circuitry, logic gates, structures, hardware, etc. to fetch, scan, decode, etc. instructions, and generate as an output one or more micro-operations, micro-code entry points, microinstructions, other instructions, or other control signals, which are decoded from, or which otherwise reflect, or are derived from, original instructions. The decoding may be implemented using various different mechanisms. Examples of suitable mechanisms include, but are not limited to, look-up tables, hardware implementations, programmable logic arrays (PLAs), microcode read only memories (ROMs), etc.

FE 112 is coupled to IDQ 114 to provide, for example, fuops at two taken branches per cycle, as well as to lookup block 120. Lookup block 120 may represent circuitry, logic gates, structures, hardware, etc., to perform lookups in a register renaming cache 122, e.g., a RAT trap, according to embodiments. Note that in Figure 1B, lookup block 120 is labeled RAT trap lookup and register renaming cache 122 is labeled as RAT trap rename, but only as one specific example of a more general register renaming approach according to embodiments. Two capsules (124 and 126), as described above for example, each of ten to sixteen fuops, are shown within register renaming cache 122.

Legacy rename block 116 may represent a pipeline implemented in circuitry, logic gates, structures, hardware, etc. to perform register renaming according to an existing approach such as using a RAT. Legacy rename block 116 and register renaming cache 122 are coupled to provide for up to 10 or 16, respectively, fuops to OOO block 130 for execution.

As shown for example in Figure 1B, register renaming cache 122 is looked up by lookup block 120 in parallel with a write to IDQ 114. A lookup may be performed on every LTT boundary switch. Register renaming cache hitting ways are read out and the number of fuops coming out of IDQ 114 are counted and matched/aligned to the fuops to be read out from register renaming cache 122. On a lookup miss, the fuops are sent through legacy rename block 116, which, for example, may represent a ten fuop wide pipeline. The rename information (e.g., as described below) for the missing traces are learned and filled into register renaming cache 122 if there is space available. On a hit, up to two capsules (e.g., up to 32 fuops) may have register renamed per cycle based on the information from register renaming cache 122, to match a front end bandwidth of two branches taken per cycle (each of which may correspond to a 16-fuop long capsule, or less if the trace is broken by the end of a taken branch). In cases in which taken branch density is very high, FE 112 may be limited to two taken branches and may be less than sixteen fuops. For that reason, to match the taken branch bandwidth of FE 112, renaming with register renaming cache 122 should also be able to support two taken branches worth of fuops. For example, assume FE 112 predicts two taken branches per cycle, and the first taken-taken trace contains only four fuops and the next taken-taken trace contains eight fuops. All of these may be renamed through the register renaming cache 122, but rename information is stored separately for the first trace (four uops) and the second trace (eight uops). Therefore, register renaming cache 122 uses two renaming capsules (124 and 126).

In embodiments, a register renaming cache (e.g., register renaming cache 122) may store the following information for each capsule.
- Live-Ins: All the unique register renaming (e.g., RAT) reads for the capsule. For example, as indicated in Figure 1B, there may be eight to ten unique sources per capsule, corresponding to eight to ten read ports per capsule (but in various embodiments the number may depend on the simulated performance, power, and area (PPA) configuration). The rest of the sources are forwarded.
- Live-In_ID/Fwd_Distance: For each source of each fuop, store where the source is renamed from. If it is forwarded from the destination of one of the prior uops in the capsule, store the forwarding distance. If it is coming from a live-in, store the identifier of the live-in.
- Live-Outs: For the capsule, store the unique logical destinations written to. The last writer to a logical destination in the capsule is the owner of the live-out. For example, as indicated in Figure 1B, there may be five to seven live-outs per capsule, corresponding to five to seven write ports per capsule (but in various embodiments the number may depend on the simulated performance, power, and area (PPA) configuration).

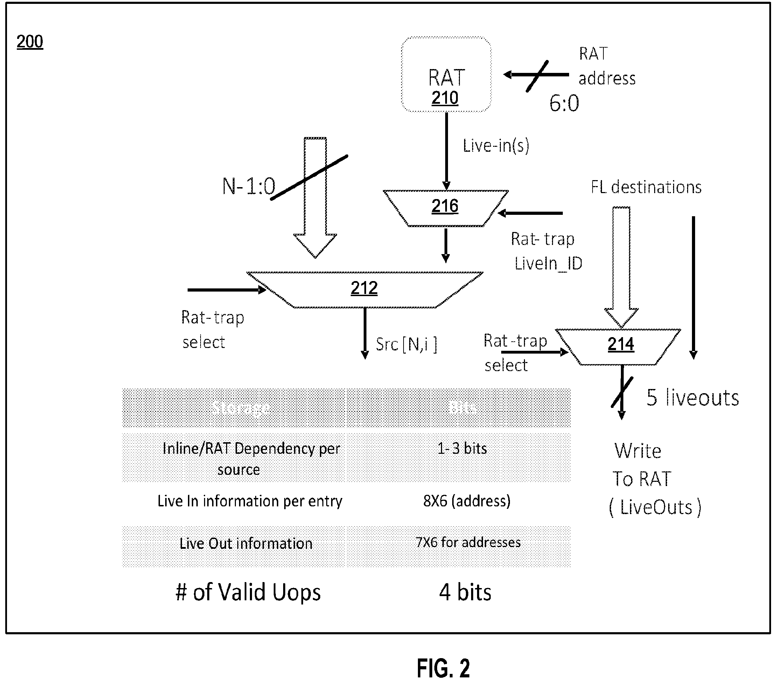

FIG. 2 illustrates register renaming circuitry 200, including RAT 210 and multiplexers 212, 214, and 216, according to an embodiment. Register renaming circuitry 200 may be implemented in a processor, processor core, execution core, etc. which may be any type of processor/core, including a general-purpose microprocessor/core, such as a processor/core in the Intel^{®} Core^{®} Processor Family or other processor family from Intel^{®} Corporation or another company, a special purpose processor or microcontroller, or any other device or component in an information processing system in which an embodiment may be implemented. For example, register renaming circuitry 200 may be implemented in any of processors 470, 480, or 415 in Figure 4, processor 500 or one of cores 502A to 502N in Figure 5, and/or core 690 in Figure 6B, each as described below, in circuitry, logic gates, structures, hardware, etc., all or parts of which may be included in a discrete component and/or integrated into the circuitry of a processing device or any other apparatus in a computer or other information processing system.

As shown in Figure 2, the source renaming, as compared to prior approaches, has no complicated control logic to determine the inline dependency and select line of the source renaming multiplexer (e.g., 212) and live-out multiplexer (e.g., 214). This select line comes directly from the memory read of the register renaming cache. Similarly, inline destination override logic is not required because the select line for the live-in multiplexer (e.g., 216) comes directly from the register renaming cache read.

Embodiments may include software assistance to improve hit rates in the register renaming cache (e.g., for large code footprint server workloads). For example, an application developer/compiler may reorganize code to reduce the number of taken branches in the code and better organize the code to reduce the number of live-ins and live-outs for a trace, for improved utilization of register renaming cache ports and storage. Embodiments may include profile-guided learning of frequent paths (traces) and re-optimization of source code and the compiler's code generator to minimize register renaming constraints. For example, when the number of register renaming live-ins in sequential code increases, the compiler may optimize the code generated (e.g., similar to how the compiler today reduces register spills and fills).

In embodiments, information is learned from register renaming operations happening between the last taken target and the next taken branch and stored in the register renaming cache in a capsule for that trace. While replaying register renaming from the register renaming cache, the number of taken branches allowed to be renamed may be limited (e.g., to two). In some cases, if the taken branch density is too high, the bandwidth of register renaming in terms of number of fuops renamed in a cycle will drop. To address this problem, if some branches have a very high probability of being taken, embodiments may utilize software and compiler support to fix the polarity of the branch to static value and not make it look like a branch, thus increasing the bandwidth register renaming according to embodiments.

In embodiments in which the number of register renaming cache ports is low, the register renaming cache may be under-utilized due to port constraints. Under-utilization may cause bad hit rates in the register renaming cache, resulting in performance loss and power increase. In embodiments, only unique logical sources (live-ins) and destinations (live-outs) for a trace are stored in one entry of the register renaming cache. When there are benchmarks which produce excessive live-ins and live-outs, the compiler may re-organize code or binary editors may be used to minimize the number of live-ins and live-outs for register renaming traces, thus bolstering hit rates for large footprint workloads common in today's servers.

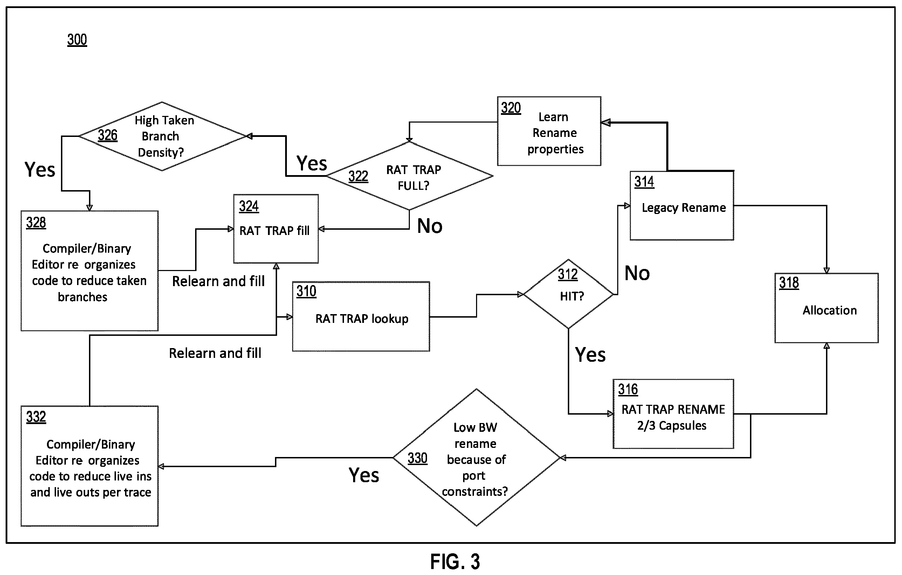

FIG. 3 illustrates a method 300 for register renaming according to an embodiment. Method 300 may be performed, in full or in part, by and/or in connection with the operation of an apparatus such as that shown Figure 1B and/or Figure 2; therefore, all or any portion of the preceding description of or related to Figures 1B and/or Figure 2 may be applicable to method 300. Note that in Figure 3, as elsewhere in this description and its accompanying figures, references may be made to a RAT trap, but only as one specific example of a more general register renaming approach according to embodiments.

In 310 of method 300, a register renaming cache lookup is performed, for example, by a lookup block (e.g., lookup block 120 in Figure 1B) in response to an LTT boundary switch and in parallel with a write to an instruction decode queue (e.g., IDQ 114 in Figure 1B).

It 312, it is determined whether the lookup resulted in a hit in the register renaming cache (e.g., register renaming cache 122). If not, then method 300 continues in 314. If so, then method 300 continues in 316.

In 314, in response to a register renaming cache miss, register renaming may be performed according to a prior approach (e.g., using a RAT), to provide for register allocation to be performed in 318 and method 300 to continue in 320.

In 316, in response to a register renaming cache hit, register renaming may be performed based on information from the register renaming cache, to provide for register allocation to be performed in 318 and method 300 to continue in 330.

In 320, information (as described above) regarding the properties of the renaming performed in 314 may be learned such that, if it determined in 322 that the register renaming cache is not full, the information may be stored in the register renaming cache in 324. However, if it is determined in 322 that the register renaming cache is full, then, if it is determined in 326 that there is a high taken branch density, then in 328 a compiler or binary editor may re-organize code to reduce taken branches to provide for another relearning for a register renaming cache fill in 324.

In 330, it may be determined whether renaming bandwidth is low due register renaming cache port constraints, and if so, then in 332, a compiler or binary editor may re-organize code to reduce live-ins and live-outs per trace to provide for another relearning for a register renaming cache fill in 324.

From 332, method 300 may return to 310.

Example apparatuses, methods, etc.

According to some examples, an apparatus (e.g., a processor core, processor core, system, system on a chip (SoC), etc.) includes a register renaming cache, front-end circuitry, lookup circuitry, and execution circuitry. The register renaming cache is to store register renaming information associated with an instruction trace. The register renaming information is to be learned from a first execution of the instruction trace and is to be used to perform register renaming in connection with a second execution of the instruction trace. The front-end circuitry is to provide, based on the instruction trace, operations for execution. The lookup circuitry to look in the register renaming cache for entries corresponding to the operations. The execution circuitry is to execute the instruction trace.

Any such examples may include any or any combination of the following aspects. The instruction trace is to start at a taken branch target and end at a next taken branch. The register renaming information is to include an identifier for each unique logical register read. The register renaming information is to include an identifier for each unique logical register written. Using the register renaming information to perform register renaming in connection with the second execution of the instruction trace is to be performed in response to a lookup hit in the register renaming cache. Learning the register renaming information in connection with the first execution of the instruction trace is to be performed in response to a lookup miss in the register renaming cache. The apparatus includes a register alias table to be used to perform register renaming in connection with the first execution of the instruction trace. Using the register alias table to perform register renaming in connection with the first execution of the instruction trace is to be performed in response to a lookup miss in the register renaming cache.

According to some examples, a method includes learning, from a first execution of an instruction trace, register renaming information; storing, in a register renaming cache, the register renaming information; and using the register renaming information to perform register renaming in connection with a second execution of the instruction trace.

Any such examples may include any or any combination of the following aspects. The instruction trace is to start at a taken branch target and end at a next taken branch. The register renaming information is to include an identifier for each unique logical register read. The register renaming information is to include an identifier for each unique logical register written. The method includes looking in the register renaming cache for an entry corresponding to the instruction trace. Using the register renaming information to perform register renaming in connection with a second execution of the instruction trace is performed in response to looking in the register renaming cache for an entry corresponding to the instruction trace resulting in a hit. Learning the register renaming information in connection with the first execution of the instruction trace is to be performed in response to looking in the register renaming cache for an entry corresponding to the instruction trace resulting in a miss. The method includes using a register alias table to perform register renaming in connection with the first execution of the instruction trace. Using the register alias table to perform register renaming in connection with the first execution of the instruction trace is to be performed in response to looking in the register renaming cache for an entry corresponding to the instruction trace resulting in a miss.

According to some examples, a method includes profiling code to provide for learning, from a first execution of an instruction trace in the code, register renaming information to be stored in a register renaming cache; and re-organizing the code to reduce register renaming constraints on performing register renaming using the register renaming information from the register renaming cache in connection with a second execution of the instruction trace.

Any such examples may include any or any combination of the following aspects. Re-organizing the code includes re-organizing the code to reduce sequential register live-ins or live-outs. Re-organizing the code includes re-organizing the code to reduce taken branches.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram

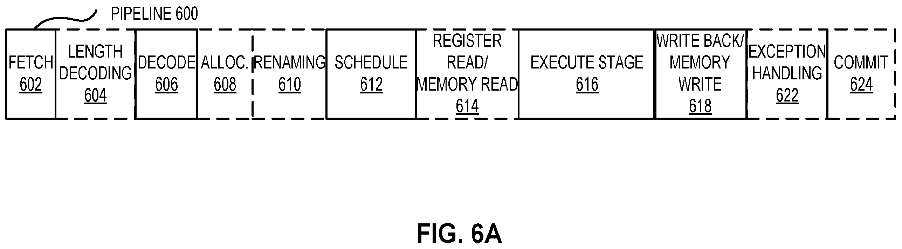

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry

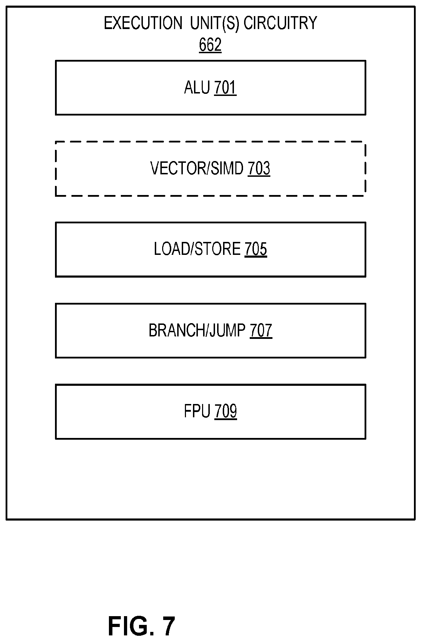

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.)

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

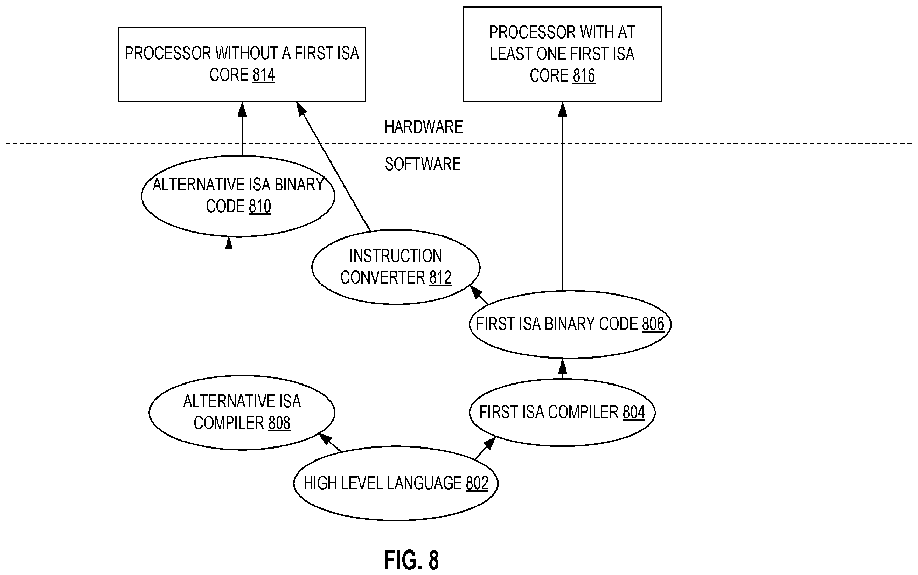

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

The specification and drawings are, accordingly, to be regarded in an illustrative rather than a restrictive sense. It will, however, be evident that various modifications and changes may be made thereunto without departing from the scope of the invention as defined by the claims.

## Claims

1. An apparatus (110), comprising:
a register renaming cache (122) to store register renaming information associated with an instruction trace, the register renaming information to be learned from a first execution of the instruction trace and to be used to perform register renaming in connection with a second execution of the instruction trace;
front-end circuitry (112) to provide, based on the instruction trace, operations for execution;
lookup circuitry (120) to look in the register renaming cache for at least one entry corresponding to the instruction trace, each entry corresponding to the instruction trace defining register renaming properties of a sequence of instructions or associated operations of the instruction trace, the instruction trace relating to a sequence of instructions or associated operations between a last taken target and a next taken branch; and
execution circuitry (130) to execute the operations of the instruction trace.

2. The apparatus of claim 1, wherein the register renaming information is to include an identifier for each unique logical register read or an identifier for each unique logical register written.

3. The apparatus of any of claim1 or 2, wherein using the register renaming information to perform register renaming in connection with the second execution of the instruction trace is to be performed in response to a lookup hit in the register renaming cache.

4. The apparatus of any of claims 1-3, wherein learning the register renaming information in connection with the first execution of the instruction trace is to be performed in response to a lookup miss in the register renaming cache.

5. The apparatus of any of claims 1-4, further comprising a register alias table to be used to perform register renaming in connection with the first execution of the instruction trace.

6. The apparatus of claim 5, wherein using the register alias table to perform register renaming in connection with the first execution of the instruction trace is to be performed in response to a lookup miss in the register renaming cache.

7. A method, comprising:
learning (320), from a first execution of an instruction trace, register renaming information;
storing (324), in a register renaming cache, the register renaming information associated with the instruction trace;
looking (310) in the register renaming cache for at least one entry corresponding to the instruction trace, each entry corresponding to the instruction trace defining register renaming properties of a sequence of instructions or associated operations of the instruction trace, the instruction trace relating to a sequence of instructions or associated operations between a last taken target and a next taken branch; and
using (316) the register renaming information to perform register renaming in connection with a second execution of the instruction trace.

8. The method of claim 7, wherein the register renaming information is to include an identifier for each unique logical register read or an identifier for each unique logical register written.

9. The method of claim 7 or 8, wherein using the register renaming information to perform register renaming in connection with a second execution of the instruction trace is performed in response to looking in the register renaming cache for at least one entry corresponding to the instruction trace resulting in a hit.

10. The method of any of claims 7-9, further wherein learning the register renaming information in connection with the first execution of the instruction trace is to be performed in response to looking in the register renaming cache for at least one entry corresponding to the instruction trace resulting in a miss.

11. The method of any of claims 7-10, further comprising:
in response to looking in the register renaming cache for at least one entry corresponding to the instruction trace resulting in a miss, using a register alias table to perform register renaming in connection with the first execution of the instruction trace.

12. The method of claim 11, wherein using the register alias table to perform register renaming in connection with the first execution of the instruction trace is to be performed in response to looking in the register renaming cache for at least one entry corresponding to the instruction trace resulting in a miss lookup miss.

13. The method of any of claims 7-12, further comprising:
profiling (328, 332) code to provide for learning, from a first execution of the instruction trace in the code, register renaming information to be stored in the register renaming cache; and
re-organizing (328, 332) the code to reduce register renaming constraints on performing register renaming using the register renaming information from the register renaming cache in connection with a second execution of the instruction trace.

14. The method of claim 13, wherein re-organizing the code includes re-organizing the code to reduce sequential register live-ins or live-outs or re-organizing the code to reduce taken branches.

## Patentansprüche

1. Einrichtung (110), die Folgendes umfasst:
einen Registerumbenennungs-Cache (122) zum Speichern von Registerumbenennungsinformationen, die mit einer Anweisungsspur assoziiert sind, wobei die Registerumbenennungsinformationen aus einer ersten Ausführung der Anweisungsspur zu erfassen sind und zum Durchführen von Registerumbenennung in Verbindung mit einer zweiten Ausführung der Anweisungsspur zu verwenden sind;
eine Frontend-Schaltungsanordnung (112) zum Bereitstellen, basierend auf der Anweisungsspur, von Operationen zur Ausführung;
eine Nachschlageschaltungsanordnung (120), um in dem Registerumbenennungs-Cache nach mindestens einem Eintrag zu suchen, der der Anweisungsspur entspricht, wobei jeder Eintrag, der der Anweisungsspur entspricht,
Registerumbenennungseigenschaften einer Sequenz von Anweisungen oder assoziierten Operationen der Anweisungsspur definiert, wobei sich die Anweisungsspur auf eine Sequenz von Anweisungen oder assoziierten Operationen zwischen einem zuletzt genommenen Ziel und
einem nächsten genommenen Zweig bezieht; und
eine Ausführungsschaltungsanordnung (130) zum Ausführen der Operationen der Anweisungsspur.

2. Einrichtung nach Anspruch 1, wobei die Registerumbenennungsinformationen eine Kennung für jedes gelesene eindeutige logische Register oder eine Kennung für jedes geschriebene eindeutige logische Register beinhalten sollen.

3. Einrichtung nach einem von Anspruch 1 oder 2, wobei das Verwenden der Registerumbenennungsinformationen zum Durchführen von Registerumbenennung in Verbindung mit der zweiten Ausführung der Anweisungsspur als Reaktion auf einen Nachschlagetreffer in dem Registerumbenennungs-Cache durchzuführen ist.

4. Einrichtung nach einem der Ansprüche 1-3, wobei das Erfassen der Registerumbenennungsinformationen in Verbindung mit der ersten Ausführung der Anweisungsspur als Reaktion auf einen Nachschlagefehltreffer in dem Registerumbenennungs-Cache durchzuführen ist.

5. Einrichtung nach einem der Ansprüche 1-4, die ferner eine Register-Alias-Tabelle umfasst, die zu verwenden ist, um Registerumbenennung in Verbindung mit der ersten Ausführung der Anweisungsspur durchzuführen.

6. Einrichtung nach Anspruch 5, wobei das Verwenden der Register-Alias-Tabelle zum Durchführen von Registerumbenennung in Verbindung mit der ersten Ausführung der Anweisungsspur als Reaktion auf einen Nachschlagefehltreffer in dem Registerumbenennungs-Cache durchzuführen ist.

7. Verfahren, das Folgendes umfasst:
Erfassen (320), aus einer ersten Ausführung einer Anweisungsspur, von Registerumbenennungsinformationen; Speichern (324), in einem Registerumbenennungs-Cache,
der Registerumbenennungsinformationen, die mit der Anweisungsspur assoziiert sind;
Suchen (310), in dem Registerumbenennungs-Cache, nach mindestens einem Eintrag, der der Anweisungsspur entspricht, wobei jeder Eintrag, der der Anweisungsspur entspricht, Registerumbenennungseigenschaften einer Sequenz von Anweisungen oder assoziierten Operationen der Anweisungsspur definiert, wobei sich die Anweisungsspur auf eine Sequenz von Anweisungen oder assoziierten Operationen zwischen einem zuletzt genommenen Ziel und einem nächsten genommenen Zweig bezieht; und
Verwenden (316) der Registerumbenennungsinformationen, um Registerumbenennung in Verbindung mit einer zweiten Ausführung der Anweisungsspur durchzuführen.

8. Verfahren nach Anspruch 7, wobei die Registerumbenennungsinformationen eine Kennung für jedes gelesene eindeutige logische Register oder eine Kennung für jedes geschriebene eindeutige logische Register beinhalten sollen.

9. Verfahren nach Anspruch 7 oder 8, wobei das Verwenden der Registerumbenennungsinformationen zum Durchführen von Registerumbenennung in Verbindung mit einer zweiten Ausführung der Anweisungsspur als Reaktion darauf durchgeführt wird, dass das Suchen, in dem Registerumbenennungs-Cache, nach mindestens einem Eintrag, der der Anweisungsspur entspricht, zu einem Treffer führt.

10. Verfahren nach einem der Ansprüche 7-9, wobei ferner das Erfassen der Registerumbenennungsinformationen in Verbindung mit der ersten Ausführung der Anweisungsspur als Reaktion darauf durchzuführen ist, dass das Suchen, in dem Registerumbenennungs-Cache, nach mindestens einem Eintrag, der der Anweisungsspur entspricht, zu einem Fehltreffer führt.

11. Verfahren nach einem der Ansprüche 7-10, das ferner Folgendes umfasst:
als Reaktion darauf, dass das Suchen, in dem Registerumbenennungs-Cache, nach mindestens einem Eintrag, der der Anweisungsspur entspricht, zu einem Fehltreffer führt, Verwenden einer Register-Alias-Tabelle, um Registerumbenennung in Verbindung mit der ersten Ausführung der Anweisungsspur durchzuführen.

12. Verfahren nach Anspruch 11, wobei das Verwenden der Register-Alias-Tabelle zum Durchführen von Registerumbenennung in Verbindung mit der ersten Ausführung der Anweisungsspur als Reaktion darauf durchzuführen ist, dass das Suchen, in dem Registerumbenennungs-Cache, nach mindestens einem Eintrag, der der Anweisungsspur entspricht, zu einem Fehltreffer Nachschlagefehltreffer führt.

13. Verfahren nach einem der Ansprüche 7-12, das ferner Folgendes umfasst:
Profiling (328, 332) eines Codes zur Bereitstellung zum Erfassen, aus einer ersten Ausführung der Anweisungsspur in dem Code, von Registerumbenennungsinformationen, die in dem Registerumbenennungs-Cache zu speichern sind; und
Reorganisieren (328, 332) des Codes, um Registerumbenennungsbeschränkungen beim Durchführen von Registerumbenennung unter Verwendung der Registerumbenennungsinformationen aus dem Registerumbenennungs-Cache in Verbindung mit einer zweiten Ausführung der Anweisungsspur zu reduzieren.

14. Verfahren nach Anspruch 13, wobei das Reorganisieren des Codes Reorganisieren des Codes, um sequenzielle Register-Live-ins oder -Live-Outs zu reduzieren, oder Reorganisieren des Codes, um genommene Zweige zu reduzieren, beinhaltet.

## Revendications

1. Appareil (110) comprenant :
un cache de renommage de registres (122) pour stocker des informations de renommage de registres associées à une trace d'instructions, les informations de renommage de registres devant être apprises à partir d'une première exécution de la trace d'instructions et devant être utilisées pour effectuer un renommage de registres en liaison avec une deuxième exécution de la trace d'instructions ;
des circuits frontaux (112) pour fournir, sur la base de la trace d'instructions, des opérations à exécuter ; des circuits de recherche (120) pour rechercher dans le cache de renommage de registres au moins une entrée correspondant à la trace d'instructions, chaque entrée correspondant à la trace d'instructions définissant des propriétés de renommage de registres d'une séquence d'instructions ou d'opérations associées de la trace d'instructions, la trace d'instructions concernant une séquence d'instructions ou d'opérations associées entre une dernière cible prise et une prochaine branche prise ; et
des circuits d'exécution (130) destinés à exécuter les opérations de la trace d'instructions.

2. Appareil selon la revendication 1, dans lequel les informations de renommage de registres doivent inclure un identifiant pour chaque registre logique unique lu ou un identifiant pour chaque registre logique unique écrit.

3. Appareil selon l'une quelconque des revendications 1 ou 2, dans lequel l'utilisation des informations de renommage de registres pour effectuer un renommage de registres en liaison avec la deuxième exécution de la trace d'instructions doit être effectuée en réponse à une réussite de recherche dans le cache de renommage de registres.

4. Appareil selon l'une quelconque des revendications 1 à 3, dans lequel l'apprentissage des informations de renommage de registres en relation avec la première exécution de la trace d'instructions doit être effectué en réponse à un échec de recherche dans le cache de renommage de registres.

5. Appareil selon l'une quelconque des revendications 1 à 4, comprenant en outre une table d'alias de registres à utiliser pour effectuer un renommage de registres en liaison avec la première exécution de la trace d'instructions.

6. Appareil selon la revendication 5, dans lequel l'utilisation de la table d'alias de registres pour effectuer un renommage de registres en relation avec la première exécution de la trace d'instructions doit être effectuée en réponse à un échec de recherche dans le cache de renommage de registres.

7. Procédé comprenant les étapes suivantes :
apprendre (320), à partir d'une première exécution d'une trace d'instructions, des informations de renommage de registres ;
stocker (324), dans un cache de renommage de registres,
les informations de renommage du registres associées à la trace d'instructions ;
rechercher (310), dans le cache de renommage de registres, au moins une entrée correspondant à la trace d'instructions, chaque entrée correspondant à la trace d'instructions définissant des propriétés de renommage de registres d'une séquence d'instructions ou
d'opérations associées de la trace d'instructions, la trace d'instructions concernant une séquence d'instructions ou d'opérations associées entre une dernière cible prise et une prochaine branche prise ; et
utiliser (316) les informations de renommage de registres pour effectuer un renommage de registres en relation avec une deuxième exécution de la trace d'instructions.

8. Procédé selon la revendication 7, dans lequel les informations de renommage de registres doivent inclure un identifiant pour chaque registre logique unique lu ou un identifiant pour chaque registre logique unique écrit.

9. Procédé selon les revendications 7 ou 8, dans lequel l'utilisation des informations des registres pour effectuer un renommage de registres en relation avec une deuxième exécution de la trace d'instructions est effectuée en réponse à un résultat positif de la recherche dans le cache de renommage de registres concernant au moins une entrée correspondant à la trace d'instructions.

10. Procédé selon l'une quelconque des revendications 7 à 9, dans lequel l'apprentissage des informations de renommage de registres en relation avec la première exécution de la trace d'instructions doit être effectué en réponse à un résultat négatif de la recherche dans le cache de renommage de registres concernant au moins une entrée correspondant à la trace d'instructions.

11. Procédé selon l'une quelconque des revendications 7 à 10, comprenant en outre l'étape suivante :
en réponse à un résultat négatif de la recherche dans le cache de renommage de registres concernant au moins une entrée correspondant à la trace d'instructions, utiliser une table d'alias de registres pour effectuer un renommage de registres en relation avec la première exécution de la trace d'instructions.

12. Procédé selon la revendication 11, dans lequel l'utilisation de la table d'alias de registres pour effectuer un renommage de registres en relation avec la première exécution de la trace d'instructions doit être effectuée en réponse à un résultat négatif de la recherche dans le cache de renommage de registres pour au moins une entrée correspondant à la trace d'instructions.

13. Procédé selon l'une quelconque des revendications 7 à 12, comprenant en outre les étapes suivantes :
profiler (328, 332) du code pour permettre l'apprentissage, à partir d'une première exécution de la trace d'instructions dans le code, d'informations de renommage de registres à stocker dans le cache de renommage de registres ; et
réorganiser (328, 332) le code pour réduire les contraintes de renommage de registres lors de l'exécution du renommage de registres à l'aide des informations de renommage de registres provenant du cache de renommage de registres en liaison avec une deuxième exécution de la trace d'instructions.

14. Procédé selon la revendication 13, dans lequel la réorganisation du code comprend de réorganiser le code afin de réduire les valeurs de registres vivantes en entrée ou en sortie séquentielles ou de réorganiser le code pour réduire les branchements pris.
